Europäisches Patentamt

European Patent Office

Office européen des brevets

(19)

(11) EP 0 494 564 B1

# (12) FASCICULE DE BREVET EUROPEEN

(45) Date de publication et mention
de la délivrance du brevet:
**20.03.1996  Bulletin 1996/12**

(51) Int Cl.6: **H04L 12/56**

(21) Numéro de dépôt: **91403505.0**

(22) Date de dépôt: **20.12.1991**

(54) **Protocole d'accès multiple à un canal de télécommunications à partir de terminaux auxiliaires par messages d'information numérisée et système correspondant**

Protokol und System zum mehrfachen Kommunikationskanalzugang durch Zusatzgerät mit digitalen Nachrichten

Multiple access protocol for a communications channel, from auxiliary terminals, with digital information messages, and corresponding system

(84) Etats contractants désignés:
**DE GB**

(30) Priorité: **26.12.1990 FR 9016269**

(43) Date de publication de la demande:
**15.07.1992  Bulletin 1992/29**

(73) Titulaire: **FRANCE TELECOM**
**F-75015 Paris (FR)**

(72) Inventeurs:
- **Zein Al Abedeen, Tarif**
  **F-31400 Toulouse (FR)**
- **Maral, Gérard**
  **F-31120 Goyrans (FR)**

(74) Mandataire: **Fréchède, Michel et al**
**Cabinet Plasseraud**
**84, rue d'Amsterdam**
**F-75009 Paris (FR)**

(56) Documents cités:
**WO-A-90/02455**          **US-A- 4 774 707**

- **IEE PROCEEDINGS SECTIONS A A I, PART F vol. 130, no. 4, Juin 1983, OLD WORKING, SURREY,GB pg 343-349; H.MINE ET AL:"DELAY ANALYSIS OF A SATELLITE CHANNEL RESERVATION SYSTEM WITH VARIABLE FRAME FORMAT"**
- **IEEE JOURNAL ON SELECTED AREAS IN COMMUNICATIONS vol. 6, no. 1, Janvier 1988,NEW YORK, US pages 210 - 222; K.JOSEPH ET AL: 'SIMULATION MODELS FORPERFORMANCE EVALUATION OF SATELLITE MULTIPLE ACCESS PROTOCOLS'**

**Description**

L'invention est relative à un protocole d'accès multiple à un canal de télécommunications à partir de terminaux auxiliaires par messages d'information numérisée et au système correspondant.

Dans le domaine de la communication par satellite, par exemple, un réseau de communication comporte habituellement une pluralité de terminaux auxiliaires, TAi, placés sur la surface terrestre, et un terminal central, TC, embarqué à bord d'au moins un satellite, une pluralité de satellites, chacun porteur d'un terminal central pouvant, le cas échéant, être prévue, afin d'assurer, si nécessaire, la couverture d'une zone territoriale déterminée. En tout état de cause, le terminal central TC peut également être placé sur une station terrestre sans sortir du cadre de l'objet de l'invention.

Les utilisateurs peuvent alors, à partir des terminaux auxiliaires TAi précités, constitués en réseau, échanger des messages d'information Mi d'un point à l'autre du réseau, par l'intermédiaire du canal de télécommunications.

Le réseau peut être constitué soit selon un réseau à configuration centralisée, la transmission des messages d'information Mi étant effectuée directement d'un terminal auxiliaire à un autre terminal auxiliaire, soit selon un réseau à configuration répartie, une gestion autonome de chaque terminal étant réalisée selon cette configuration, en l'absence de terminal central.

Dans le cas de la configuration centralisée, la gestion de l'accès multiple d'un terminal auxiliaire TAi+q est réalisée par l'intermédiaire du terminal central TC au moyen de messages de demande de réservation MR adressés par chaque terminal auxiliaire TAi au terminal central TC et de messages d'allocation MA adressés en réponse par le terminal central TC à ce même terminal auxiliaire.

Le processus de gestion d'accès généralement utilisé par le terminal central TC consiste, selon une technique connue, à allouer aux terminaux auxiliaires TAi, et à leurs utilisateurs, de manière dynamique, une voie de transmission distribuée temporellement suite à une demande, plutôt que d'allouer une voie de transmission discriminée spatialement. De cette manière, deux types de messages sont alors transmis, les messages de réservation et les messages de données ou d'information.

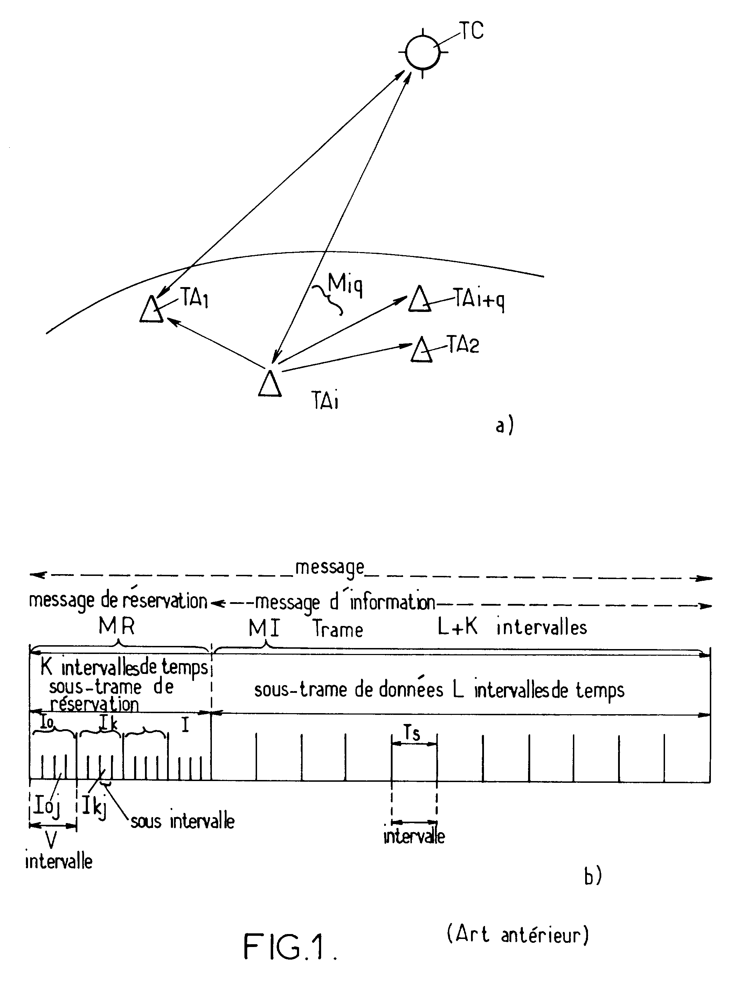

Selon un exemple de réalisation particulier classique de système d'accès multiple à la demande (DAMA), désigné sous le nom de protocole réservation-ALOHA, utilisé principalement pour l'intercommunication par réseau de satellites, chaque terminal auxiliaire TAi transmet un court message de réservation MR puis un message d'information MI. Le message de réservation, tel que représenté au point b) de la figure 1, contient des informations relatives au nombre d'intervalles de temps Ts nécessaires pour assurer la transmission du message d'information considéré MI.

Ainsi qu'on l'a représenté sur la figure 1 précitée, le protocole de réservation-ALOHA met en oeuvre des trames de structure fixe. La voie temporelle est subdivisée en intervalles de temps dont la durée Ts est égale à la durée de transmission d'un paquet de données pour un débit de transmission de valeur R. Les intervalles de temps Ts sont organisés en une trame comportant au total F intervalles, la trame étant de même subdivisée en une sous-trame de réservation, comportant K intervalles, et en une sous-trame de données comportant L intervalles. Chaque intervalle de temps Ik de la sous-trame de réservation appelé intervalle de réservation respectivement sous-trame de données appelé intervalle de données est, à son tour, divisé en sous-intervalle Ikj correspondant, chaque sous-intervalle précité, en fonction de sa qualification, étant destiné à assurer la transmission de messages de réservation selon le protocole ALOHA précité.

Ainsi, un message de données ou message d'information MI consiste en au moins un paquet de données et nécessite donc, en vue de sa transmission, la capacité de transmission d'un ou plusieurs intervalles de données. Lorsqu'un usager engendre un message d'information MI à partir d'un terminal auxiliaire TAi déterminé, il transmet conjointement un message de réservation MR, lequel contient l'information relative au nombre de paquets du message d'information MI, c'est-à-dire du nombre d'intervalles d'information nécessaires pour assurer la transmission de ce message. Lorsque le message de réservation est transmis avec succès, c'est-à-dire lorsque le message de réservation MR a été transmis et reçu par le terminal central TC, ce dernier est alors stocké dans une mémoire de réservation ayant pour objet d'assurer le stockage successif de tout message de réservation MR émis par un terminal auxiliaire quelconque TAi, l'ensemble des messages de réservation stockés précités étant constitués en une file d'attente. La gestion de la file d'attente est alors assurée selon un mode premier entré premier sorti (FIFO) selon l'ordre de réception des messages de réservation. La gestion des messages de réservation stockés est effectuée à partir des sous-trames de réservation précédemment décrites, lesquelles permettent la mise en oeuvre du processus ci-après :

- Un utilisateur engendrant un message d'information MI dans une trame, transmet également un message de réservation MR transmis au cours d'un sous-intervalle de temps sélectionné de manière aléatoire dans les K.V sous-intervalles de temps de la sous-trame de réservation de la trame suivante. Le message d'information MI, ou une partie de celui-ci, n'est transmis vers un terminal de destination TAi+q donné qu'après réception d'un message d'allocation engendré par le terminal central TC.

- Le message de réservation d'un utilisateur qui, au niveau d'un terminal auxiliaire TAi donné, subit un retard déterminé dans la réception de l'accusé de réception, est réputé n'avoir pas été valablement transmis. Ce message de réservation MR est alors à nouveau transmis dans une trame choisie de manière aléatoire parmi un nombre Z déterminé de trames successives ultèrieures.

Le système de transmission selon le protocole ALOHA précédemment décrit donne satisfaction. Toutefois, l'un des problèmes relatif à la mise en oeuvre de ce dernier est constitué par le fait que les messages de réservation MR ou sous-trame de réservation, peuvent, dans certaines conditions, rendre le système constitué par le réseau instable. Une telle difficulté est parfaitement connue des systèmes de transmission selon le protocole ALOHA et, pour une étude plus complète de ce problème, on pourra utilement se reporter à la publication de K. KLEINROCK intitulée "Queueing systems", Vol. II et publiée dans la revue "Computer Applications", New York : Wiley 1976.

De manière générale, on considèrera que le phénomène d'instabilité précité apparaît lors de fluctuations importantes du trafic, le réseau s'écartant de son point de fonctionnement nominal pour entrer en situation d'auto-blocage dans laquelle la capacité de traitement des messages de réservation, et, en conséquence, des messages d'information, devient pratiquement nulle, ni les messages de réservation MR ni les messages d'allocation MA ne pouvant être normalement transmis.

La présente invention a pour objet de remédier à l'inconvénient précité, par la mise en oeuvre d'un protocole stabilisé d'accès multiple à un canal de télécommunications à partir de terminaux auxiliaires par messages d'information numérisée.

Un autre objet de la présente invention est la mise en oeuvre d'un système d'accès multiple à un canal de télécommunications à partir de terminaux auxiliaires par messages d'information numérisée permettant la mise en oeuvre du protocole stabilisé d'accès précité.

Le protocole d'accès multiple à un canal de télécommunications à partir de terminaux auxiliaires de communication par messages d'information numérisée objet de la présente invention, dans lequel un terminal auxiliaire adresse à un terminal central un message de réservation et le terminal central adresse au terminal auxiliaire un message d'allocation correspondant au message d'information engendré, vers un autre terminal auxiliaire, par le terminal auxiliaire à partir d'une pluralité de messages d'information élémentaires (mj) successifs, est remarquable en ce que chaque message de réservation d'ordre p est relatif à l'ensemble des messages d'information élémentaires successifs antérieurs engendrés, mémorisés et non encore transmis par le terminal auxiliaire vers l'autre terminal auxiliaire entre l'instant antérieur de réception, par le terminal auxiliaire, d'un message d'allocation d'ordre p-n, émis par le terminal central et l'instant d'émission par le terminal auxiliaire du message de réservation d'ordre p.

Le protocole d'accès multiple à un canal de télécommunications à partir de terminaux auxiliaires de communication par message d'information numérisée, objet de la présente invention, trouve application à la gestion de réseaux de télécommunication par satellite par exemple et, de manière plus générale, de tout réseau fixe ou mobile dans lequel une gestion d'accès ainsi qu'une identification et/ou une localisation de postes ou terminaux auxiliaires est effectuée à partir d'un poste ou terminal central ou décentralisé.

Une description plus détaillée du protocole d'accès multiple à un canal de télécommunications à partir de terminaux auxiliaires de communication par messages d'information numérisée, objet de la présente invention, sera donnée ci-après dans la description et les dessins dans lesquels, outre la figure 1 représentative d'un réseau de terminaux constitué par un terminal central et des terminaux auxiliaires mettant en oeuvre un protocole d'accès multiple de type ALOHA classique :

- la figure 2 représente, de manière illustrative, les étapes successives de mise en oeuvre du protocole stabilisé d'accès multiple objet de la présente invention,
- la figure 3a représente un diagramme explicatif des conditions d'équilibre d'un réseau de terminaux mettant en oeuvre un protocole d'accès multiple à un canal de télécommunications selon un protocole ALOHA classique,
- la figure 3b représente un diagramme explicatif des conditions d'équilibre d'un réseau de terminaux mettant en oeuvre un protocole d'accès multiple à un canal de télécommunications conformément au protocole selon l'invention,
- la figure 4a représente un organigramme des étapes du processus de mise en oeuvre du protocole d'accès multiple à un canal de télécommunications, au niveau du terminal central, lors de la réception d'un message de réservation émis par un terminal auxiliaire TAi quelconque,
- la figure 4b représente un organigramme des étapes du processus de mise en oeuvre du protocole d'accès multiple à un canal de télécommunications, au niveau du terminal central, lors de la transmission, vers un terminal auxiliaire TAi, d'un message d'allocation,
- la figure 5a représente un schéma synoptique d'un terminal auxiliaire dans le cas d'un réseau de configuration centralisée,
- la figure 5b représente un schéma synoptique d'un terminal central dans le cas d'un réseau de configuration centralisée,
- la figure 5c représente, dans le cas d'un réseau de type configuraion centralisée, un exemple de structure des messages transmis, messages d'information, de réservation, d'accusé de réception et d'allocation,
- la figure 6 représente un schéma synoptique d'un terminal utilisé dans le cas d'un réseau de configuration répartie.

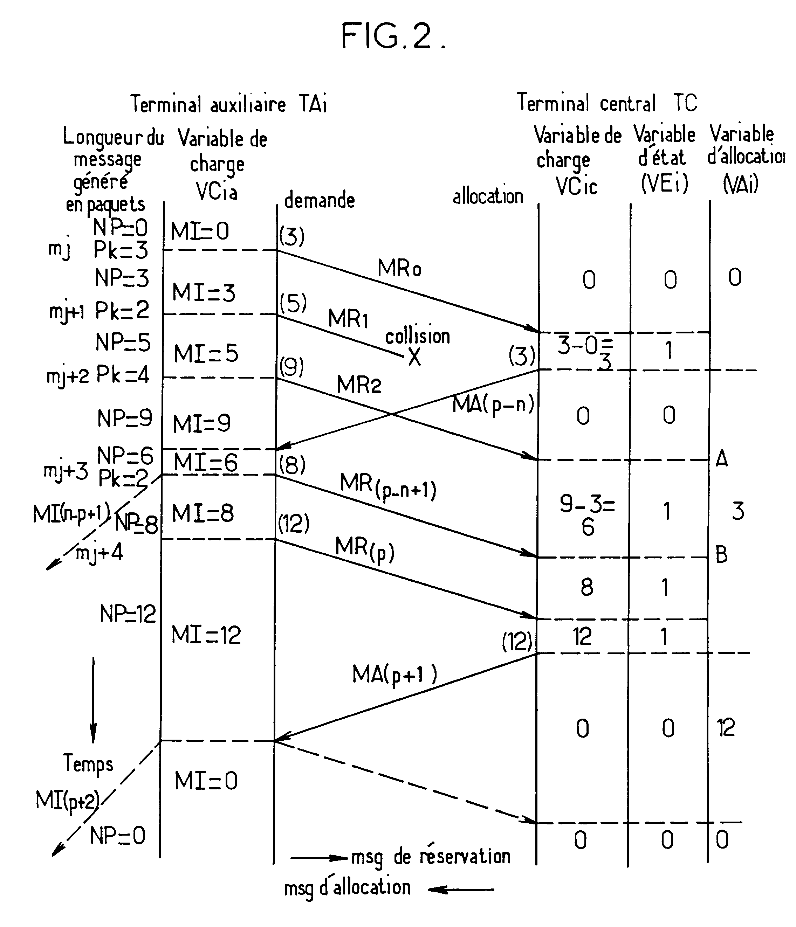

Le protocole d'accès multiple à un canal de télécommunications à partir de terminaux auxiliaires de communication par messages d'information numérisée objet de la présente invention sera décrit en liaison avec la figure 2.

D'une manière générale, on considèrera le réseau de terminaux d'intercommunications comme un réseau dont la structure est de type configuration centralisée.

Toutefois, le principe de mise en oeuvre du protocole d'accès multiple objet de la présente invention reste tout-à-fait applicable à un réseau de configuration répartie.

De même que dans le cas des réseaux de terminaux d'intercommunications de l'art antérieur, le réseau permettant la mise en oeuvre du protocole d'accès multiple objet de la présente invention est constitué de M terminaux auxiliaires notés TAi et d'un terminal central noté TC.

Les terminaux auxiliaires engendrent des messages de longueurs variables et découpent ces derniers en paquets de taille fixe. L'unité de capacité de transmission, correspondant à un intervalle de données ou à un intervalle de réservation de durée Ts, ainsi que précédemment décrit en liaison avec la figure 1, est donc la capacité nécessaire pour la transmission d'un paquet.

Ainsi, chaque terminal auxiliaire TAi permet d'assurer la communication par messages d'information numérisée Mi vers un autre terminal auxiliaire noté TAi+q, le terminal auxiliaire TAi adressant en outre au terminal central TC un message de réservation MR.

En réponse, le terminal central TC adresse au terminal auxiliaire TAi précité un message d'allocation MA correspondant au message d'information MI.

De manière générale, chaque terminal auxiliaire est capable d'engendrer le message d'information correspondant MI à partir d'une pluralité de messages d'informations élémentaires successifs notés mj.

On comprendra bien sûr que les messages d'information MI précités peuvent être engendrés par concaténation classique des messages élémentaires mj successifs.

Sur la figure 2, on a représenté un diagramme des temps du protocole d'accès multiple à un canal, à partir de terminaux auxiliaires conformes à l'objet de la présente invention. En premier lieu, on comprendra que l'ordre des messages, messages de réservation MR, messages d'information MI, messages d'allocation de capacité de transmission MA est défini comme une succession d'évènements à des instants relatifs quelconques repérés au niveau du terminal auxiliaire TAi considéré. Ainsi, deux instants successifs d'ordre p-n puis p-n+1 par exemple, peuvent présenter une valeur temporelle quelconque.

Ainsi qu'on l'a en outre représenté en figure 2, et conformément à un aspect particulièrement avantageux du protocole d'accès multiple à un canal de télécommunications à partir de terminaux auxiliaires objets de la présente invention, chaque message de réservation d'ordre p, noté MRp, est relatif à l'ensemble des messages d'information élémentaire mj successifs antérieurs engendrés, mémorisés et non encore transmis par le terminal auxiliaire TAi au terminal auxiliaire différent TAi+q, ces messages d'information élémentaire mj étant donc présents au niveau du terminal auxiliaire TAi considéré entre l'instant antérieur de réception par ce terminal auxiliaire TAi d'un message d'allocation d'ordre p-n, ce message d'allocation étant noté MAp-n émis par le terminal central TC et l'instant d'émission par le terminal auxiliaire du message de réservation d'ordre p, message de réservation noté MRp.

Un exemple concret particulier de mode opératoire du protocole d'accès multiple objet de la présente invention sera donné en liaison avec la figure 2.

On considère en début de processus de mise en oeuvre du protocole d'accès multiple objet de la présente invention, tel que représenté en figure 2, que pour le terminal auxiliaire TAi considéré, la longueur du message d'information MI en nombre de paquets est égale à 0, le terminal central TC pour le terminal auxiliaire TAi correspondant étant en situation initiale d'allocation de valeur elle aussi égale à O.

Un message d'information élémentaire mj étant engendré par un utilisateur au niveau du terminal auxiliaire TAi, ce message élémentaire ayant par exemple une longueur en nombre de paquets NP=3, la longueur du message d'information MI prend à son tour la valeur 3.

Le terminal auxiliaire TAi considéré, suite à la demande de l'usager, engendre alors un message de réservation noté MR0 adressé au terminal central TC pour une demande de réservation correspondant à la longueur du message MI soit à trois paquets Pk.

La demande de réservation ayant été enregistrée par le terminal central TC, cette demande est placée en file d'attente ainsi que décrit précédemment dans la description.

L'émission d'un message d'allocation par le terminal central TC vers le terminal auxiliaire TAi considéré n'étant pas simultanée, en raison de la gestion de la file d'attente, l'usager du terminal auxiliaire TAi engendre par exemple un nouveau message d'information élémentaire, noté mj+1, dont la longueur, à titre d'exemple non limitatif, correspond à un nombre de deux paquets Pk, la valeur de la longueur du message MI étant alors actualisée à la somme des valeurs des longueurs actuelles et des longueurs antérieures, soit, dans l'exemple donné, MI=5 en nombre de paquets.

Sur la figure 2, au niveau du terminal auxiliaire TAi précité, on notera alors que le terminal auxiliaire TAi, suite à la création par l'utilisateur du nouveau message d'information élémentaire mj+1, et donc du message d'information MI de longueur 5, engendre un nouveau message de réservation MR1 pour une demande de réservation correspondant à la longueur du message d'information MI, soit pour 5 paquets de données.

Une collision notée X sur la figure 2 étant supposée, la collision étant définie en fait comme l'absence de réception du message de réservation MR1 précédemment décrit par le terminal central TC, on comprendra que la situation potentielle d'allocation de capacité de transmission par le terminal central TC pour le terminal auxiliaire TAi considéré, reste égale à 3, longueur de l'espace de capacité de transmission susceptible d'être allouée par le terminal central TC pour le terminal auxiliaire TAi suite à la réception antérieure du message de réservation MR0.

De manière concomitante, l'utilisateur du terminal auxiliaire TAi a pu engendrer un nouveau message élémentaire mj+2 dont la longueur en nombre de paquets de données est par exemple égale à 4, le nombre total de paquets prenant alors la valeur NP=9 et le message d'information correspondant MI prenant cette même valeur.

Le terminal auxiliaire TAi transmet alors vers le terminal central TC un message de réservation MR2 pour une demande de réservation de mémoire égale à 9 en nombre de paquets.

Suite à la gestion de la file d'attente au niveau du terminal central TC, ce dernier permet d'engendrer vers le terminal auxiliaire TAi considéré, un message d'allocation noté MAp-n à un instant non corrélé par rapport à l'instant de réception du message de réservation MR2 précédemment mentionné, ce message d'allocation MAp-n autorisant le terminal auxiliaire TAi à transmettre un message d'information MI dont la longueur en nombre de paquets est égale à 3.

Le message d'allocation MAp-n permet alors de ramener la longueur du message d'information MI en nombre de paquets Pk de la valeur 9 à la valeur 6 sur émission, par le terminal auxiliaire TAi, d'un message d'information noté MIn-p+1 de longueur 3 vers l'autre terminal auxiliaire noté TAi+q.

Le processus du protocole d'accès multiple conforme à l'objet de la présente invention peut alors être poursuivi ainsi que donné à titre d'exemple sur la figure 2.

Suite à l'émission du message d'information MI n-p+1, la longueur du message d'information MI mémorisée au niveau du terminal auxiliaire TAi est égale à 6. En supposant la création, par l'utilisateur du terminal auxiliaire TAi, d'un nouveau message d'information élémentaire noté mj+3 de longueur en nombre de paquets égale à 2, la longueur du message d'information MI devient alors égale à 8 et le terminal auxiliaire TAi peut alors engendrer un message de réservation noté MRp-n+1 pour une allocation mémoire égale à 8 en nombre de paquets, ce qui ramène la situation d'allocation de capacité de transmission au niveau du terminal central à cette valeur.

La création par l'utilisateur du terminal auxiliaire TAi, d'un nouveau message élémentaire mj+4 de longueur 4 en nombre de paquets permet au terminal auxiliaire TAi d'actualiser la longueur du message d'information MI à la valeur 12 et d'adresser au terminal central TC un nouveau message de réservation noté MRp pour la valeur 12 précitée, laquelle sera traitée selon la gestion de la file d'attente précédemment mentionnée.

Le traitement de la valeur d'allocation mémoire 12 précitée est alors effectué par le terminal central TC par la transmission d'un message d'allocation noté MAp+1 vers le terminal auxiliaire TAi considéré pour l'espace de capacité de transmission correspondant de valeur 12 en nombre de paquets, ce qui permet par exemple, suite à la transmission par le terminal auxiliaire TAi d'un message d'information noté MIp+2 vers l'autre terminal auxiliaire TAi+q, de ramener la valeur de la longueur du message d'information MI, exprimée en nombre de paquets de données, au niveau du terminal auxiliaire TAi, à la valeur 0.

Bien entendu, au niveau du terminal TC, la situation d'allocation mémoire pour le terminal auxiliaire TAi a été ramenée à 0 suite à la transmission du message d'allocation MAp+1 précédemment décrit.

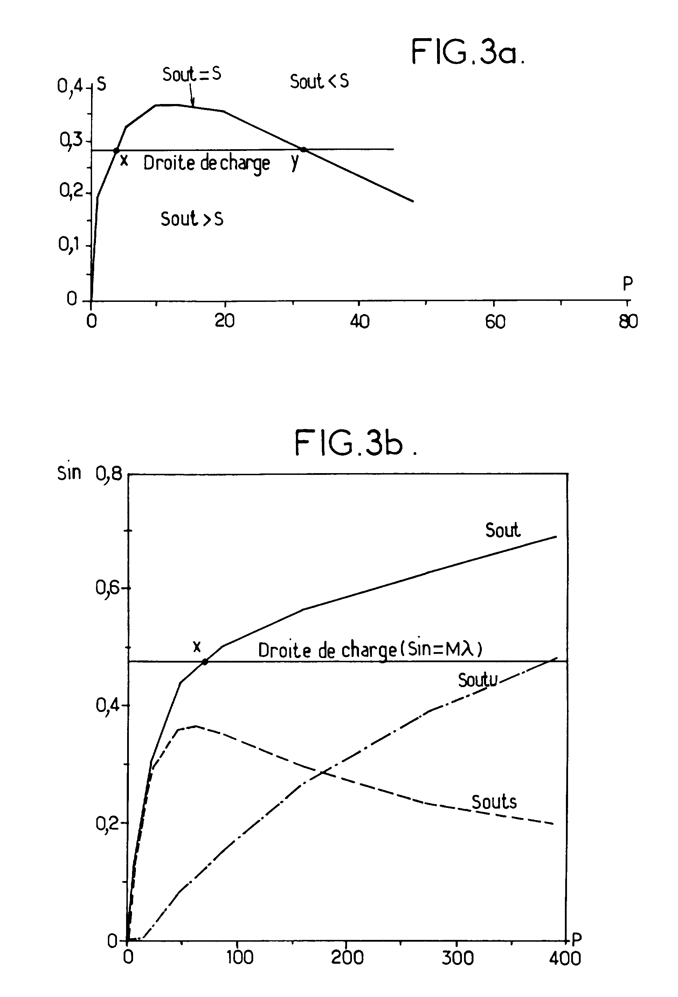

Un justificatif de la stabilité du protocole d'accès multiple objet de la présente invention sera maintenant donné en liaison avec la figure 3.

Les performances du protocole réservation-ALOHA ont fait l'objet de travaux importants. Parmi ceux-ci, on peut citer les articles de L. KLEINROCK précédemment mentionné, de D. RAYCHAUDHURI et K. JOSEPH "Simulation Models for Performance Evaluation of Satellites Multiple Access Protocole" IEEE ISAC, Janvier 1988, et de L. ROBERTS "Dynamic Allocation of Satellite Capacity Through Packet Reservation" AFPIS Conference Proceedings, Vol. 42, pp 771-716, 1973.

Le présent justificatif est basé sur l'étude de la stabilité de la sous-trame de réservation en l'absence d'accumulation résiduelle de messages de réservation non traités par la file d'attente du terminal central TC.

Le réseau est réputé comporter M stations auxiliaires TAi. Dans ces conditions, il convient de formuler l'hypothèse selon laquelle la subdivision de la voie de transmission temporelle en une sous-trame de réservation et en une sous-trame de données, ainsi que représenté en figure 1, est équivalent à une subdivision, dans l'espace des fréquences, de la bande passante de la voie de transmission par satellite en deux sous-voies temporelles continues distinctes, une sous-voie de réservaton et une sous-voie de données. Pour un débit de transmission de valeur R de la trame temporelle, le débit de transmission des sous-voies de réservation Rr respectivement sous-voie de données Rd est donné par les relations :

$$Rr = R\,\frac{K}{K+L} \; ; \; Rd = R\,\frac{L}{K+L}$$

Ainsi, pour une référence de temps identique de la voie de transmission temporelle et des sous-voies de transmission temporelles continues distinctes, sous-voie de réservation et sous-voie de données, le nombre de bits transmis pendant un intervalle de temps est le même, et la durée de l'intervalle de temps de la sous-voie de réservation satisfait à la relation :

$$T's = \frac{R}{Rr} \cdot TS = TS\,\frac{K+L}{K}$$

Il en est de même pour toute subdivision temporelle de l'intervalle de temps, en particulier pour les sous-intervalles de temps Ikj correspondants, lesquels pour la sous-voie de réservation seront désignés pour cette raison par sous-intervalles expansés Ikje.

Pour une probabilité λ de création d'un message d'information MI par un terminal auxiliaire TAi, la probabilité de création, par ce terminal auxiliaire, d'un message de réservation dans un intervalle de temps expansé est la même.

Pour un intervalle de temps expansé donné, le nombre de messages de réservation MR qui seront retransmis par le terminal auxiliaire TAi est égal à B. Le temps de propagation, terminal auxiliaire, terminal central, terminal auxiliaire étant noté Pr, une situation de collision d'un message de réservation, dans le cas d'un réseau à configuration centralisée, est connue après 2Pr sous-intervalles de temps expansés après transmission par ce dernier. Dès lors, le terminal auxiliaire TAi procède à la retransmission du message de réservation MR dans un sous-intervalle de temps expansé sélectionné de manière aléatoire parmi les Rtx sous-intervalles de temps suivants.

Une probabilité P de sélection d'un sous-intervalle de temps donné par le terminal auxiliaire TAi considéré, en vue de retransmettre l'un de ses B messages de réservation MR, cette probabilité, lorsque les B messages de réservation MR doivent être transmis, pendant la durée 0, 2Pr + Rtx , vérifie la relation :

$$P = \frac{B}{2Pr+Rtx}$$

Le principe des probabilités totales, appliqué à la détermination de la probabilité de transmission Pr(s) avec succès d'un message de réservation dans un sous-intervalle de temps expansé s'écrit :

$$Pr(s) = Pr(n) + Pr(sr)$$

relation dans laquelle :

- Pr(n) représentant la probabilité de création d'un nouveau message de réservation, et de transmission avec succès, vérifie l'équation : Pr(n)=M.Pr(1) x Pr(o) , Pr(1) désignant la probabilité de création d'un message par un seul terminal auxiliaire TAi, Pr(o) désignant la probabilité de non retransmission d'un message par un autre terminal auxiliaire quelconque TAi+q, et
- Pr(sr) représentant la probabilité de retransmission avec succès de ce message vérifie l'équation :

$$Pr(sr) = M.Pr(s\text{-}i\text{-}t\text{-}e) \times Pr(o\text{-}n\text{-}m),$$

Pr(s-i-t-e) désignant la probabilité de sélection du sous-intervalle de temps expansé considéré par un terminal auxiliaire TAi pour assurer la retransmission et Pr(o-n-m) désignant la probabilité de non création d'un message pendant le sous-intervalle de temps expansé précité.

En définitive, la capacité de traitement, exprimée en terme de probabilité, de la sous-voie de réservation s'écrit, compte-tenu de l'approximation selon laquelle M est très important et λ petit, pour un produit S = M. constant,

$$Sout = e^{-S} (1\text{-}P)^{M\text{-}1} (S+MP)$$

Le réseau est dit en équilibre lorsque le débit du trafic, constitué par l'ensemble des messages créés, est égal à la capacité de traitement de la sous-voie de réservation : soit pour

$$S = Sout$$

Le contour d'équilibre du réseau, obtenu pour la condition précitée, est représenté en figure 3a, le contour d'équilibre subdivisant le plan S, P en deux zones correspondant à Sout > S et à Sout < S. Pour un traffic effectif de valeur S=M. λ donné, la droite de charge correspondante coupe le contour d'équilibre en deux points x et y, ces points étant désignés dans les conditions d'utilisation du réseau considéré, comme points d'équilibre de ce dernier.

On démontre que le point x situé sur le contour d'équilibre, dans une zone à pente positive est stable, alors que le point y, situé dans une zone à pente négative est instable.

Cependant, le réseau au point x n'est pas inconditionnellement stable, en raison de l'existence du point d'équilibre y, lequel est par essence instable ; les risques de passage du point x au point y, instable, sont importants lors de l'accroissement du trafic, d'où en conséquence le risque d'instabilité.

Dans le cas du protocole objet de la présente invention, au contraire, pour un nombre P de messages d'information mémorisés, en attente de transmission dans les terminaux auxiliaires TAi, le flux de trafic d'entrée des messages dans le système de réservation, considéré dans son ensemble comme une mémoire globale, s'écrit Sin = M.λ. Un message de réservation MRp libère la mémoire globale soit dans le cas de la transmission avec succès, soit dans le cas où celui-ci ne requiert pas une retransmission. On rappelle ici qu'un message de réservation MRp ne nécessite pas de retransmission dans le cas où un message de réservation suivant MRp+1 est engendré par le même terminal auxiliaire après le message MRp mais avant le délai de temporisation du message de réservation MRp. Ainsi, le flux du trafic de sortie Sout est la somme de deux composantes, celle correspondant aux messages de réservation transmis avec succès Souts, de manière semblable au procédé de réservation-ALOHA classique représenté en figure 3a, et celle Soutu correspondant aux messages de réservation transmis sans succès, pour lesquels aucun message d'accusé de réception n'a été reçu, mais non soumis à retransmission pendant le délai de temporisation. Les courbes correspondantes des paramètres Sout = Souts+Soutu en fonction du nombre P de messages sont représentées en figure 3b, ces courbes ayant été obtenues suite à des essais pour une configuration M = 150 terminaux auxiliaires, une capacité de sous-trame de réservation de 400 sous-intervalles en 600ms, le délai de temporisation de retransmission étant pris égal à 20 sous-intervalles. Le volume de trafic d'entrée est modifié par modification de la charge des terminaux auxiliaires λ.

On constatera, à l'observation de la figure 3b, qu'il n'existe plus qu'un point x d'intersection de la droite de charge Sin = M.λ avec la caractéristique Sout, ce point x étant inconditionnellement stable, quelle que soit la valeur du trafic d'entrée Sin. On a pu également observer, lors de fluctuations de la charge de trafic, une variation correspondante du point de fonctionnement x autour de la position d'équilibre stable correspondante. La caractéristique Soutu effectue ainsi une compensation de la caractéristique Souts pour les fortes valeurs de P.

Ainsi, le protocole d'accès multiple objet de la présente invention, permet-il de substituer au protocole de réservation ALOHA antérieur, dans lequel pour chaque message d'information élémentaire créé un message de réservation est engendré, un protocole plus adapté dans lequel un seul message de réservation est engendré pour l'ensemble des messages élémentaires créés non encore transmis.

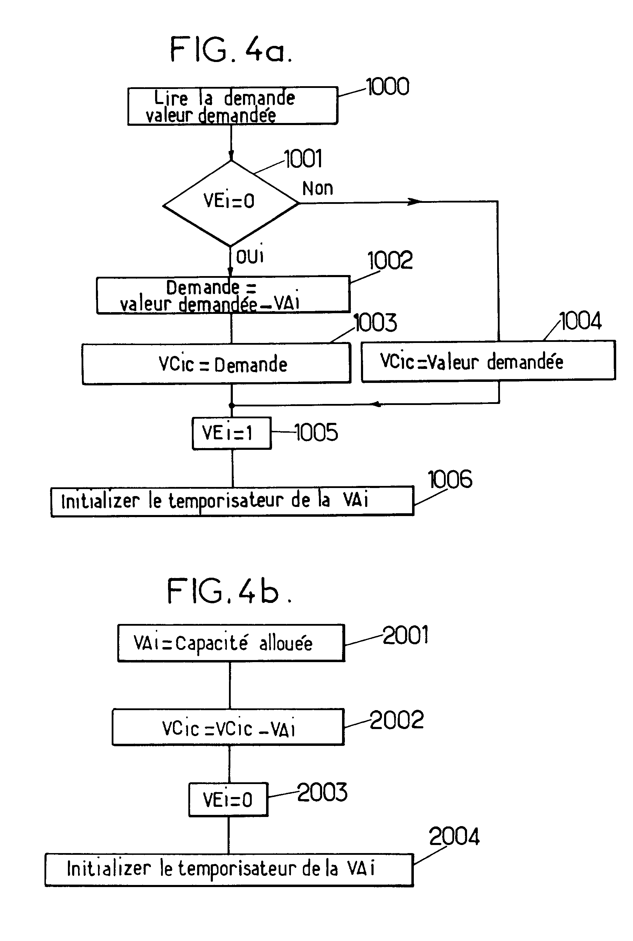

Une description plus détaillée du processus de mise en oeuvre du protocole d'accès multiple à un canal à partir de terminaux auxiliaires, objets de la présente invention, sera maintenant donnée en liaison avec la figure 2 puis avec les figures 4a et 4b.

D'une manière générale, on considère que les messages d'information MI sont transmis par un terminal auxiliaire TAi considéré vers un terminal auxiliaire différent noté TAi+q, cette transmission étant effectuée selon un ordre p-n+1, le message d'information MIp-n+1 étant transmis selon un ordre immédiatement supérieur à chaque message d'allocation d'ordre p-n, message noté MAp-n reçu par le terminal auxiliaire considéré TAi.

Bien entendu, on considèrera une durée quelconque entre les deux évènements successifs d'ordre p-n et p-n+1.

De même, les messages d'information élémentaire mj et les messages d'information MIp-n+1 transmis et formés à partir de ces derniers sont considérés comme de longueurs quelconques et subdivisés en paquets, notés Pk, de longueur arbitraire fixe.

Ainsi, chaque message de réservation d'ordre p, noté MRp émis par chaque terminal auxiliaire TAi, contient une information représentative du nombre de paquets NP mémorisés au niveau du terminal auxiliaire TAi et en attente de transmission vers l'autre terminal auxiliaire précédemment mentionné.

Selon une mise en oeuvre particulièrement avantageuse non limitative du processus du protocole d'accès multiple objet de la présente invention, le processus de réservation-allocation peut être mis en oeuvre à partir de deux variables de charge, une variable de charge de capacité de transmission, exprimée en nombre de paquets de données, pour le terminal auxiliaire TAi considéré, cette variable de charge étant notée VCia et une variable de charge de capacité de transmission pour ce même terminal TAi considéré, au niveau du terminal central, cette variable de charge étant notée VCic.

De manière générale, on comprendra que la variable VCia est actualisée après création d'un nouveau message et après réception d'un message d'allocation MA de la part du terminal central TC.

De cette manière, cette variable indique en permanence le nombre de paquets de données en attente au niveau du terminal auxiliaire TAi correspondant.

La variable VCic est actualisée après réception d'un message de réservation de la part du terminal auxiliaire TAi et après transmission d'un message d'allocation MA vers le terminal auxiliaire TAi correspondant. Ainsi, la variable VCic est utilisée par le terminal central TC chaque fois qu'il y a lieu d'allouer une capacité de transmission au terminal auxiliaire TAi considéré pour déterminer la capacité requise par le terminal auxiliaire précité à cet instant.

Ainsi qu'on le remarquera à l'observation de la figure 2, la variable VCic d'état de charge de capacité de transmission du terminal central TC comprend une première sous-variable notée VAi désignée par variable d'allocation de capacité de transmission pour le terminal auxiliaire TAi correspondant ayant engendré le message de réservation et une variable d'état notée VEi caractéristique, pour le terminal auxiliaire TAi considéré, de l'état de demandes ou de l'absence de demande d'allocation mémoire.

Ainsi, chaque fois que le terminal central TC transmet un message d'allocation MA au terminal auxiliaire TAi considéré, il attribue à la variable d'allocation VAi la valeur de la capacité allouée.

Si, pendant un temps de propagation aller-retour, le terminal central TC ne reçoit pas de demande du terminal auxiliaire considéré, ni ne transmet aucun message d'allocation au terminal auxiliaire TAi précité, la valeur de la variable d'allocation VAi est automatiquement remise à zéro.

La variable d'état VEi ne peut prendre que deux valeurs, 0 ou 1.

Elle est mise à la valeur 1 lorsque le terminal central TC reçoit une demande du terminal auxiliaire TAi considéré et à la valeur 0 lorsque le terminal central TC transmet une valeur d'allocation au terminal auxiliaire TAi.

Cette variable d'état VEi permet de supprimer la redondance contenue dans les demandes du terminal auxiliaire TAi de la manière ci-après :

Si le terminal central TC reçoit une demande du terminal auxiliaire TAi alors que la variable d'état VEi a pour valeur 0, alors la demande du terminal auxiliaire TAi est décrémentée de la valeur actuelle de la variable d'allocation VAi.

Un tel cas est représenté au point A de la figure 2.

En ce point, une demande d'allocation est reçue, provenant d'un message de réservation engendré par le terminal auxiliaire TAi, le message de réservation noté MR2. En ce point, la demande de réservation est reçue alors que la variable d'état VEi a pour valeur 0. Dans un tel cas, la demande de réservation égale à 9 est décrémentée par la valeur de la variable d'allocation VAi = 3 et la nouvelle valeur de la demande 6 est alors attribuée à la variable de charge de capacité de transmission du terminal central pour le terminal auxiliaire considéré TAi, soit à la variable VCic.

Au point B de la même figure 2, une demande de réservation est reçue par le message de réservation MRp, la variable d'état VEi ayant pour valeur 1.

Dans ce cas, la demande de réservation n'est pas changée et la variable VCic de charge de capacité de transmission du terminal central pour le terminal auxiliaire TAi correspondant prend alors la valeur de la demande réelle de réservation, soit la valeur 12 dans le cas du message de réservation MRp.

Le déroulement du processus précité lors de la réception d'une demande de réservation par l'intermédiaire d'un message de réservation tel que le message MRp précédemment cité provenant du terminal auxiliaire TAi est représenté en figure 4a dans laquelle on peut reconnaître une première étape 1000 de lecture de la demande de réservation, puis une étape 1001 de test sur la valeur de la variable d'état VEi par rapport à la valeur 0, ce test étant suivi, en cas de réponse positive à ce dernier, d'une étape 1002 d'attribution de la demande d'allocation à la valeur demandée décrémentée de la valeur de la variable d'allocation VAi puis d'une étape 1003 d'attribution, à la variable de charge pour le terminal TAi considéré au niveau du terminal TC, c'est-à-dire la variable VCic, de la nouvelle valeur de la demande ainsi obtenue.

Au contraire, dans le cas où la réponse au test 1001 est négative, à la variable VCic précitée est attribuée en une étape 1004 la valeur demandée.

Suite aux étapes 1003 et 1004 précitées, la variable d'état VEi est actualisée à la valeur 1 en une étape 1005, ce qui permet ensuite, en une étape 1006, d'initialiser une temporisation de la variable d'allocation VAi conformément au processus de gestion d'une nouvelle demande mémorisée dans la file d'attente pour le terminal TAi considéré.

La figure 4b représente les opérations à effectuer par le terminal central TC lors de la transmission d'un message d'allocation MA vers le terminal auxiliaire TAi.

Ainsi, suite à une étape 2001 permettant l'attribution de la capacité allouée à la variable VAi, est prévue une étape 2002 d'actualisation de la variable de charge VCic pour le terminal TAi au niveau du terminal central TC, cette valeur étant décrémentée de la valeur de la variable d'allocation VAi considérée et l'étape 2002 précitée étant suivie d'une étape 2003 de réactualisation de la variable d'état VEi, laquelle est mise à la valeur 0. L'étape 2003 est ensuite suivie d'une étape 2004 d'initialisation de temporisation de la variable d'allocation VAi selon les mêmes modalités que l'étape 1006 de la figure 4a.

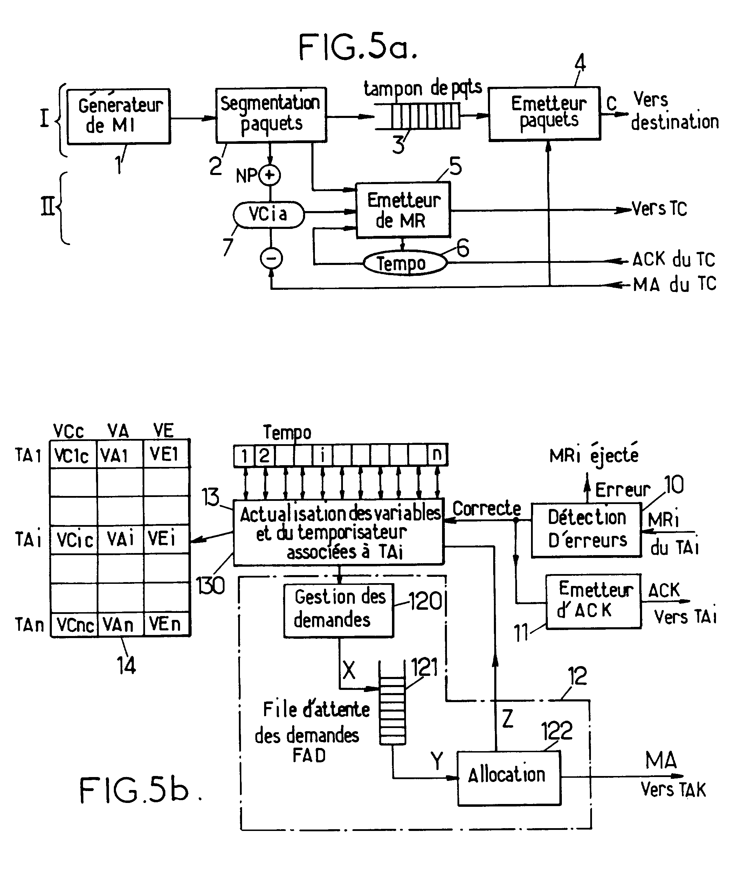

Une description plus détaillée d'un terminal auxiliaire d'intercommunication par messages d'information numérisée dans un réseau à configuration centralisée sera donnée en liaison avec la figure 5a.

De l'observation de cette figure, on notera que le terminal auxiliaire TAi considéré comporte, de manière classique, une première voie (I) comprenant, en cascade, un générateur 1 de messages d'information MI, un circuit 2 de segmentation en paquets de données Pk de ces messages, une mémoire tampon 3 permettant le stockage des paquets à transmettre et un émetteur 4 des paquets précités constituant les messages d'information transmis.

En outre, le terminal TAi considéré comprend une deuxième voie notée II comprenant un émetteur 5 de messages de réservation noté MR, cet émetteur étant piloté par le circuit de segmentation en paquets 2 et par un circuit 6 de temporisation d'émission recevant un message d'accusé de réception noté ACK transmis normalement par le terminal central TC.

On notera que, de manière classique dans le domaine des télécommunications par satellite, le circuit de temporisation est un circuit permettant par exemple une temporisation de 300 millisecondes correspondant sensiblement à un trajet aller-retour d'un message entre un terminal auxiliaire donné et le terminal central.

Conformément à l'objet de la présente invention, le terminal auxiliaire précité comporte en outre un circuit noté 7 de calcul d'une variable de charge de capacité de transmission en nombre de paquets au niveau du terminal auxiliaire TAi considéré.

On notera que ce circuit de calcul reçoit, d'une part, un signal délivré par le circuit 2 de segmentation en paquets, ce signal étant bien entendu représentatif du nombre NP de paquets à transmettre et, d'autre part, un signal représentatif du nombre d'intervalles de temps alloués par le dernier message d'allocation MAp d'ordre p par exemple transmis par le terminal central TC.

Selon un mode de réalisation avantageux non limitatif, le circuit de calcul 7 peut être constitué par un soustracteur numérique permettant d'assurer la décrémentation de la valeur demandée d'une quantité correspondant à la valeur allouée VAi pour constituer la demande conformément à l'étape 1002 telle que représentée en figure 4a.

Sur la figure 5b, on a représenté un schéma synoptique d'un terminal central d'intercommunication conforme à l'objet de la présente invention, permettant la mise en oeuvre du protocole d'accès multiple à un canal de télécommunications, tel que décrit précédemment, dans lequel les conditions de stabilité sont bien entendu satisfaites.

De manière classique, le terminal central TC considéré comporte un circuit de réception 10 des messages de réservation MR engendrés par chaque terminal auxiliaire TAi considéré. Ce circuit de réception peut être avantageusement constitué par un circuit de détection d'erreurs, la détection d'une erreur pouvant avoir pour effet le rejet du message de réservation MR considéré et l'absence de détection d'erreur ayant pour effet d'autoriser la transmission du message de réservation MR précité vers les circuits de traitement du terminal central TC.

De manière classique, le terminal central TC comporte un circuit 11 émetteur de messages d'accusé de réception, ces messages étant notés ACK.

Ce circuit est un circuit de type classique et, en tant que tel, ne sera pas décrit plus en détails.

Le terminal central TC comporte enfin les éléments matériels constitutifs d'un circuit de gestion de la file d'attente des demandes de réservation constituée par les messages de réservation MR acceptés par le circuit de réception 10. De manière classique, le circuit 12 de gestion de la file d'attente peut comprendre un circuit 120 d'attribution de numéros d'ordre des différents messages de réservation MR reçus par le terminal central TC, suivi d'un circuit de mémorisation de type pile noté 121 permettant de mémoriser les différents messages de réservation MR précités selon une procédure de type FIFO spécifique, laquelle sera décrite plus en détail ultérieurement dans la description.

Le circuit de mémorisation 121 de type pile est alors suivi d'un circuit 122 générateur des messages d'allocation MA. Le circuit 122 est de type classique et ne sera pas décrit plus en détail.

Conformément à l'objet de la présente invention, le terminal central comporte en outre un circuit 13 d'actualisation des variables de charge de transmission VCic du nombre de paquets NP, variables d'allocation de capacité de transmission VAi et d'état VEi de demandes d'allocation pour chacun des terminaux auxiliaires TAi.

En outre, associé au circuit d'actualisation 13 précité, est prévu un circuit 14 de mémorisation de ces variables actualisées.

De manière avantageuse, le circuit 13 d'actualisation peut être constitué par un calculateur noté 130 auquel est associé un module de programme permettant d'assurer le traitement des variables de charge de capacité de transmission VCic, d'allocation de capacité de transmission VAi et d'état VEi de demandes d'allocation, conformément au processus défini précédemment dans la description, conformément aux figures 4a et 4b.

On notera enfin que la procédure de gestion de file d'attente des demandes d'allocation ou réservation, conformément au protocole objet de l'invention, peut alors être avantageusement réalisée selon une procédure FIFO actualisée, le numéro d'ordre attribué par le circuit 120 à un message de réservation considéré, relatif à un terminal auxiliaire TAi déterminé, étant conservé, et le rang de traitement de ce message étant en conséquence conservé, pendant la procédure d'actualisation des valeurs des variables précitées et pendant le rafraîchissement de ces valeurs allouées dans la file d'attente.

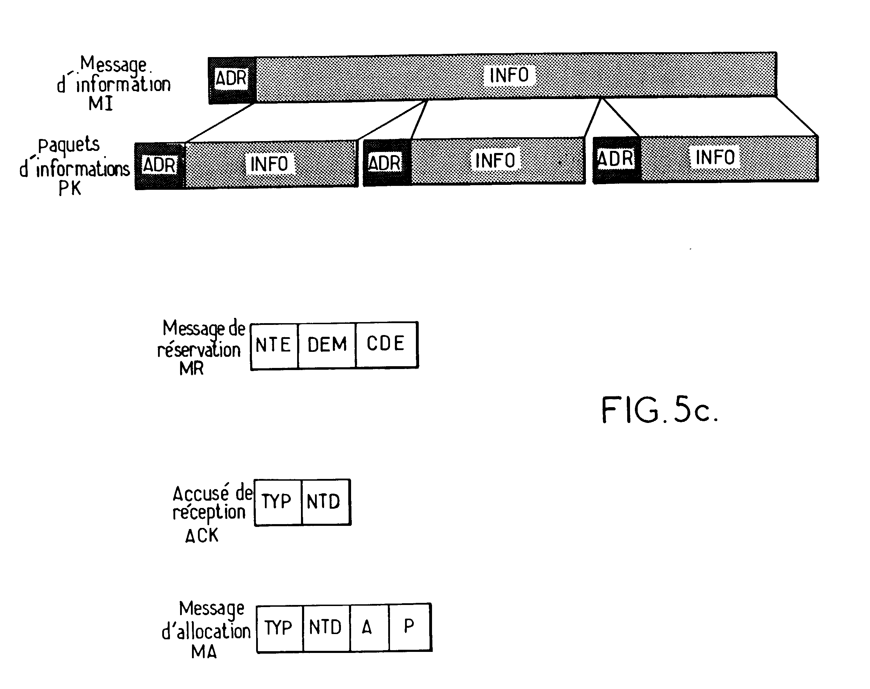

A des fins purement illustratives, on donnera, ainsi que représenté en figure 5c, un exemple de forme des messages qui peuvent être utilisés dans la configuration centralisée du réseau de télécommunications constitué par un terminal central tel que représenté en figure 5b et une pluralité de terminaux auxiliaires tels que représentés en figure 5a.

De manière classique, les messages d'information peuvent comporter une zone d'adresses notée ADR contenant l'adresse de la destination du message, c'est-à-dire celle du terminal auxiliaire TAi+q considéré, les paquets d'information Pk pouvant reproduire la structure représentée relativement au message d'information MI.

A la zone d'adresses ADR précitée, est associée une zone INFO contenant l'information utile.

Les messages de réservation MR peuvent comporter une zone d'identification comportant le numéro du terminal émetteur NTE, une zone comportant la valeur de la demande, c'est-à-dire de la variable VCia, cette zone étant notée DEM sur la figure 5c, et une zone de codes de détection d'erreurs notée CDE.

Le message d'accusé de réception ACK peut comporter uniquement, à titre d'exemple, une zone de type notée TYP et une zone notée NTD comportant le numéro du terminal destinataire.

Le message d'allocation MA peut également comporter une zone de type notée TYP représentative du type du message suivie d'une zone comportant le numéro du terminal destinataire puis d'une zone comportant le nombre d'intervalles de temps alloués puis d'une zone P indiquant la position du premier intervalle de temps dans la sous-trame de données considérée.

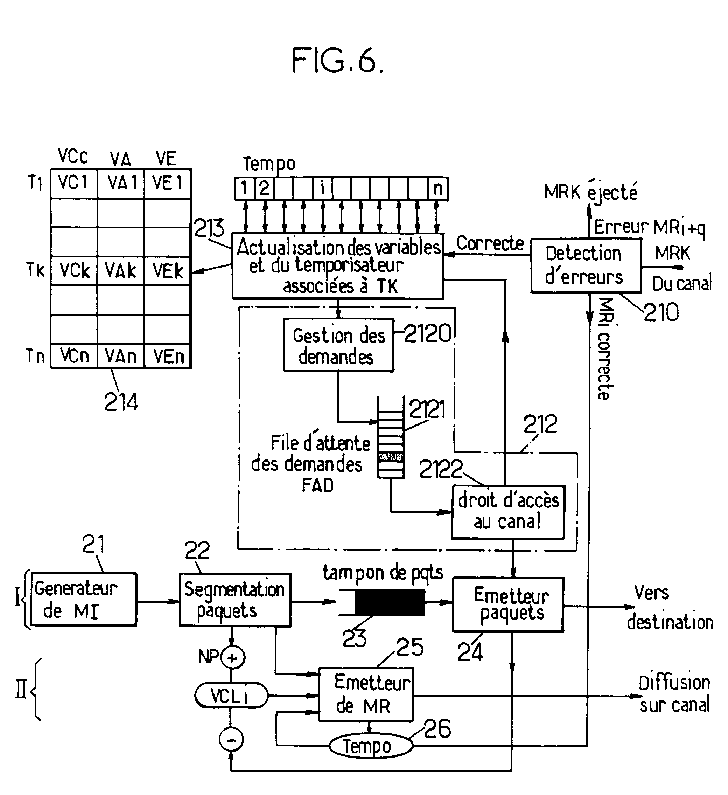

Une description plus détaillée d'un terminal d'intercommunications par messages d'information numérisée objet de la présente invention dans le cas où le réseau est un réseau de terminaux Ti en configuration répartie, sera maintenant donnée en liaison avec la figure 6.

Dans le cas d'un réseau en configuration répartie, ce réseau comporte un nombre arbitraire M de terminaux Ti communiquant entre eux par l'intermédiaire d'un canal de télécommunications. Ce type de réseau ne comporte alors pas de terminal central afin d'assurer la gestion de l'accès des terminaux au canal.

Dans une telle configuration, il n'existe pas de message d'allocation, comme dans le cas de la configuration centralisée.

L'accès au canal est effectué par décision locale au niveau de chaque terminal Ti, lequel, du point de vue de l'allocation de capacité de transmission, devient sensiblement autonome.

Ainsi, un terminal décide d'accéder au canal lorsque sa demande arrive en tête de la file d'attente des demandes. Dans un tel cas cependant, il existe alors au niveau de chaque terminal Ti un système de gestion de file d'attente de demandes.

Dans un tel cas, les différents terminaux Ti doivent impérativement actualiser leur file d'attente de manière identique afin que les décisions concernant le droit d'accès au canal de transmission à un instant donné soit identique.

Ainsi, chaque terminal Ti met en oeuvre les variables suivantes :

Un tableau de variables sensiblement analogue au tableau de variables constitué par les variables actualisées du terminal central TC en configuration centralisée. La ligne de rang k du tableau, k pouvant prendre les valeurs 1 à M, contient les trois variables VCk, VEk et VAk relatives à un terminal Tk d'ordre k considéré.

Bien entendu, les procédures d'actualisation de ces variables sont identiques à celles décrites relativement à la configuration centralisée.

En outre, un système de temporisation semblable est associé à chaque terminal Tk pour assurer la gestion de la variable d'allocation TAk, ce système de temporisation opérant de la même manière que dans le cas de la configuration centralisée.

Une variable de charge locale notée VCLi est mise en oeuvre et correspond à la variable de charge VCia de la configuration centralisée.

On comprend alors que l'architecture d'un terminal Ti dans la configuration répartie se résoud à une combinaison du terminal auxiliaire TAi et du terminal central TC de la configuration centralisée en liaison avec les figures 5a et 5b.

La seule différence majeure réside dans le fait que, en lieu et place du processus d'allocation, le terminal Ti met en oeuvre un processus de décision concernant le droit à l'accès au canal de télécommunications à un instant donné. Il apparaît alors que si à un moment donné toutes les files d'attente de demandes du réseau contiennent les mêmes informations, tous les terminaux Ti peuvent prendre, à cet instant, la même décision.

On comprendra alors, ainsi qu'on l'a représenté en figure 6 que, dans le cas de terminaux Ti en configuration répartie, chaque terminal comprend une première voie notée I comportant les mêmes éléments que dans le cas de la figure 5a, ces mêmes éléments portant les mêmes références précédées du chiffre 2.

De la même façon, le terminal Ti comprend une deuxième voie comportant des éléments sensiblement identiques à ceux représentés en figure 4a, ces mêmes éléments comportant les mêmes références précédées du chiffre 2.

Dans le cas de la figure 6 cependant, le circuit 27 de calcul de la variable VCLi permet de calculer la variable locale de charge de capacité de transmission du nombre de paquets au niveau du terminal Ti considéré, cette variable locale de charge étant substituée à la variable de charge VCia précédemment décrite en liaison avec la figure 4a.

Le terminal Ti comporte en outre successivement les circuits 210 de réception des messages de réservation MR engendrés par chaque autre terminal Tk analogues au circuit 10 de la figure 4a, le circuit 212 de gestion de la file d'attente des demandes de réservation des capacités de transmission des terminaux analogues au circuit 12 de la figure 4a et enfin les circuits 213 d'actualisation des variables de charge de transmission du nombre de paquets VCc d'allocation de capacité de transmission VA et d'état de demandes d'allocation VE ainsi que le circuit 214 de mémorisation de ces variables actualisées.

Bien entendu, la gestion de la file d'attente est alors réalisée selon une procédure FIFO actualisée par les valeurs des variables actualisées précitées.

On a ainsi décrit un protocole d'accès multiple à un canal de télécommunications particulièrement avantageux, ce protocole d'accès multiple étant susceptible d'être mis en oeuvre à partir de réseaux à configuration centralisée, c'est-à-dire comportant un terminal central de gestion des accès ou à partir d'un réseau de télécommunications à configuration répartie, la décision d'accès au canal étant prise au niveau de chaque terminal Ti considéré.

Le protocole d'accès multiple à un canal de télécommunications objet de la présente invention est particulièrement avantageux dans la mesure où les conditions de stabilité des processus d'accès multiples ALOHA sont grandement améliorées, ce qui permet d'éviter les processus d'auto-blocage incontrôlé de ce type de réseau lors de conditions de trafic très importantes.

## Revendications

1. Protocole d'accès multiple à un canal de télécommunications à partir de terminaux auxiliaires (TAi) de communication par messages d'information numérisée (MI), dans lequel un terminal auxiliaire (TAi) adresse à un terminal central (TC) un message de réservation (MR) et ledit terminal central (TC) adresse audit terminal auxiliaire un message d'allocation (MA) correspondant audit message d'information (MI) engendré par ledit terminal auxiliaire à partir d'une pluralité de messages d'information élémentaires (mj) successifs vers un terminal auxiliaire différent TAi+q, caractérisé en ce que chaque message de réservation d'ordre p, (MRp), est relatif à l'ensemble des messages d'information élémentaires (mj) successifs antérieurs engendrés, mémorisés et non encore transmis par ledit terminal auxiliaire (TAi) audit terminal auxiliaire différent TAi+q entre l'instant antérieur de réception, par ledit terminal auxiliaire (TAi), d'un message d'allocation d'ordre p-n, (MA p-n), émis par ledit terminal central (TC), et l'instant d'émission par ledit terminal auxiliaire dudit message de réservation d'ordre p, (MR p).

2. Protocole d'accès selon la revendication 1, caractérisé en ce que lesdits messages d'information (MI) sont transmis par ledit terminal auxiliaire (TAi) selon un ordre p-n+1, (MIp-n+1) immédiatement supérieur à chaque message d'allocation d'ordre p-n, (MAp-n), reçu par ledit terminal auxiliaire (TAi).

3. Protocole d'accès selon l'une des revendications 1 ou 2, caractérisé en ce que chaque message d'information élémentaire (mj) et chaque message d'information (MI p-n+1) transmis formé à partir de ces derniers sont de longueur quelconque et subdivisés en paquets (Pk) de longueur arbitraire fixe.

**4.** Protocole d'accès selon la revendication 3, caractérisé en ce que chaque message de réservation (MRp), d'ordre p, émis par ledit terminal auxiliaire (TAi) contient une information représentative du nombre de paquets (NP) mémorisés au niveau dudit terminal auxiliaire (TAi) et en attente de transmission vers ledit autre terminal auxiliaire.

**5.** Protocole selon l'une des revendications 1 à 4, caractérisé en ce que chaque message d'allocation (MA p-n) est formé à partir d'une variable (VCic) de charge de capacité de transmission dudit terminal auxiliaire correspondant (TAi), au niveau du terminal central (TC).

**6.** Protocole selon la revendication 5, caractérisé en ce que ladite variable (VCic) de charge de capacité de transmission au niveau dudit terminal central (TC) comprend une première sous-variable (VAi) d'allocation mémoire pour le terminal auxiliaire (TAi) correspondant ayant engendré ledit message de réservation, et une sous-variable d'état (VEi), caractéristique, pour le terminal auxiliaire (TAi) considéré, de l'état de demande ou d'absence de demande d'allocation mémoire.

**7.** Protocole selon la revendication 6, caractérisé en ce que chaque message de réservation (MRp) d'ordre p comporte une variable (VCia) de charge de capacité de transmission en nombre de paquets (NP) au niveau dudit terminal auxiliaire (TAi), ladite variable de charge étant actualisée puis incorporée audit message de réservation (MRp) après chaque création et mémorisation par ledit terminal auxiliaire d'un message d'information élémentaire (mj) et des paquets le constituant, ou après réception d'un message d'allocation.

**8.** Protocole selon les revendication 6 et 7, caractérisé en ce que, en vue de supprimer la redondance contenue dans les demandes du terminal auxiliaire (TAi), ladite variable d'état (VEi) caractéristique pour le terminal auxiliaire (TAi) considéré de l'état de demande ou d'absence de demande d'allocation mémoire est une variable binaire prenant les valeurs 0 ou 1, la demande de terminal auxiliaire (TAi) étant décrémentée de la valeur actuelle de la variable d'allocation correspondante (VAi) lorsque la variable d'état (VEi) a pour valeur zéro.

**9.** Terminal auxiliaire d'intercommunication par messages d'information numérisée (MI) dans un réseau de terminaux auxiliaires (TAi) gérés par un terminal central (TC), selon un protocole d'accès multiple, chaque terminal auxiliaire (TAi) adressant au terminal central (TC) un message de réservation (MR) et le terminal central (TC) adressant à chaque terminal auxiliaire un message d'allocation (MA), lesdits messages d'information (MI) étant engendrés à partir d'une pluralité de messages d'information élémentaires (mj) successifs, constitués en paquets de données, vers un terminal auxiliaire différent (TAi+q), ce terminal auxiliaire comportant au moins une première voie comprenant, en cascade, un générateur (1) de message d'information, un circuit (2) de segmentation en paquets de données (Pk), une mémoire tampon (3) de stockage des paquets et un émetteur (4) des messages d'information (MI) transmis, une deuxième voie comprenant un émetteur (5) de message de réservation (MR) piloté par le circuit de segmentation en paquets et par un circuit (6) de temporisation d'émission recevant un message d'accusé de réception (ACK) engendré par le terminal central (TC), caractérisé en ce que ce terminal auxiliaire comporte en outre un circuit (7) de calcul d'une variable (Vcia) de charge de capacité de transmission du nombre de paquets au niveau du terminal auxiliaire (TAi), ce circuit recevant, d'une part, un signal délivré par ledit circuit (2) de segmentation en paquets, représentatif du nombre de paquets (NP) à transmettre et, d'autre part, un signal représentatif du nombre d'intervalles de temps alloués par le dernier message d'allocation (MAp) d'ordre p transmis par le terminal central (TC).

**10.** Terminal central d'intercommunication par messages d'information numérisée dans un réseau de terminaux auxiliaires (TAi) gérés par ce terminal central (TC) selon un protocole d'accès multiple, chaque terminal auxiliaire (TAi) adressant au terminal central (TC) un message de réservation (MR) et le terminal central (TC) adressant à chaque terminal auxiliaire un message d'allocation (MA), lesdits messages d'information (MI) étant engendrés à partir d'une pluralité de messages d'information élémentaires mj successifs, constitués en paquets de données, vers un terminal auxiliaire différent (TAi+q), ce terminal central comprenant un circuit de réception (10) des messages de réservation (MR) engendrés par chaque terminal auxiliaire (TAi) considéré et un circuit générateur (11) de message (ACK) d'accusé de réception vers ledit terminal auxiliaire (TAi), ainsi qu'un circuit (120, 121) de gestion de la file d'attente des demandes de réservation de capacité de transmission des différents terminaux auxiliaires (TAi), caractérisé en ce que ledit terminal central comporte :

- un circuit (13) d'actualisation, pour chaque terminal auxiliaire (TAi), des variables de charge de transmission (VCic) du nombre de paquets (NP), d'allocation de capacité de transmission (VAi) et d'état (VEi) de demande d'allocation,
- un circuit (14) de mémorisation de ces variables actualisées, la gestion de la file d'attente étant réalisée selon une procédure FIFO actualisée par les valeurs desdites variables actualisées.

11. Terminal central selon la revendication 10, caractérisé en ce que ledit circuit (13) d'actualisation comprend :

- un calculateur (130),
- un module de programmes permettant d'assurer le traitement des variables de charge de capacité de transmission (VCic), d'allocation de capacité de transmission (VAi) et d'état (VEi) conformément au processus défini par la revendication 8.

12. Terminal d'intercommunication par messages d'information numérisée (MI), pour un réseau de terminaux (Ti) en configuration répartie, chaque terminal (Ti) comprenant :

- une première voie comportant, en cascade, un générateur (21) de messages d'information (MI), un circuit (22) de segmentation en paquets de données, une mémoire tampon (23) de stockage des paquets et un émetteur (24) des messages d'information (MI) transmis,
- une deuxième voie comprenant un émetteur (25) de message de réservation (MR) piloté par le circuit de segmentation en paquets et par un circuit (26) de commande d'émission,
- un circuit (210) de réception des messages de réservation MR engendré par chaque autre terminal Tk,
- un circuit (212) de gestion de la file d'attente des demandes de réservation des capacités de transmission des terminaux, caractérisé en ce qu'il comprend
- un circuit (27) de calcul d'une variable (VCLi) locale de charge de capacité de transmission du nombre de paquets au niveau du terminal Ti considéré, ce circuit recevant, d'une part, un signal délivré par le circuit (22) de segmentation en paquets, représentatif du nombre de paquets (NP) à transmettre et, d'autre part, un signal représentatif du nombre de paquets autorisés à la transmission,
- un circuit (213) d'actualisation des variables de charge de transmission, du nombre de paquets VCc, d'allocation de capacité de transmission VA, et d'état VE de demande d'allocation,
- un circuit (214) de mémorisation de ces variables actualisées, la gestion de la file d'attente étant réalisée selon une procédure FIFO actualisée par les valeurs des variables actualisées.

**Patentansprüche**

1. Protokoll zum mehrfachen Zugriff von Kommunikationshilfsendstellen (TAi) auf einen Telekommunikationskanal mittels digitalisierter Informationsnachrichten (MI), bei welchem eine Hilfsendstelle (TAi) an eine zentrale Endstelle (TC) eine Reservierungsnachricht (MR) sendet und die zentrale Endstelle (TC) an die Hilfsendstelle eine der Informationsnachricht (MI) entsprechende Bewilligungsnachricht (MA) sendet, wobei die Hilfsendstelle die Informationsnachricht (MI) für eine andere Hilfsendstelle (TAi+q) aus einer Mehrzahl von aufeinanderfolgenden elementaren Informationsnachrichten (mj) erzeugt, **dadurch gekennzeichnet**, daß jede Reservierungsnachricht (MRp) der Ordnungszahl p sich auf alle aufeinanderfolgenden elementaren Informationsnachrichten (mj) bezieht, die zwischen einem früheren Zeitpunkt, zu dem die Hilfsendstelle (TAi) eine von der zentralen Endstelle (TC) emittierte Bewilligungsnachricht (MAp-n) der Ordnungszahl p-n empfangen hat, und dem Zeitpunkt, zu dem die Hilfsendstelle die Reservierungsnachricht (MRp) der Ordnungszahl p emittiert, früher erzeugt, gespeichert und von der Hilfsendstelle (TAi) noch nicht zu der anderen Hilfsendstelle (TAi+q) übertragen wurden.

2. Zugriffsprotokoll nach Anspruch 1, **dadurch gekennzeichnet**, daß die Informationsnachrichten (MI) von der Hilfsendstelle (TAi) gemäß einer Ordnungszahl p-n+1 (MIp-n+1) übertragen werden, welche unmittelbar auf jede von der Hilfsendstelle (TAi) empfangene Bewilligungsnachricht (MAp-n) der Ordnungszahl p-n folgt.

3. Zugriffsprotokoll nach einem der Ansprüche 1 oder 2, **dadurch gekennzeichnet**, daß jede elementare Informationsnachricht (mj) und jede aus diesen letzteren gebildete, übertragene Informationsnachricht (MIp-n+1) eine beliebige Länge aufweisen und in Pakete (Pk) beliebiger fester Länge unterteilt sind.

4. Zugriffsprotokoll nach Anspruch 3, **dadurch gekennzeichnet**, daß jede von der Hilfsendstelle (TAi) emittierte Reservierungsnachricht (MRp) der Ordnungszahl p eine Information enthält, die die Anzahl (NP) von Paketen angibt, welche im Bereich der Hilfsendstelle (TAi) gespeichert sind und auf die Übertragung zu der anderen Hilfsendstelle warten.

5. Protokoll nach einem der Ansprüche 1 bis 4, **dadurch gekennzeichnet**, daß jede Bewilligungsnachricht (MAp-n) aus einer Übertragungskapazitäts-Belastungsvariablen (VCic) der entsprechenden Hilfsendstelle (TAi) im Bereich der zentralen Endstelle (TC) gebildet ist.

6.  Protokoll nach Anspruch 5,
    **dadurch gekennzeichnet**, daß die Übertragungskapazitäts-Belastungsvariable (VCic) im Bereich der zentralen Endstelle (TC) eine erste Speicherbewilligungs-Untervariable (VAi) für die entsprechende Hilfsendstelle (TAi) umfaßt, welche die Reservierungsnachricht erzeugt hat, sowie eine Zustands-Untervariable (VEi) umfaßt, welche für die betrachtete Hilfsendstelle (TAi) den Nachfragezustand oder das Fehlen einer Speicherbewilligungsnachfrage kennzeichnet.

7.  Protokoll nach Anspruch 6,
    **dadurch gekennzeichnet**, daß jede Reservierungsnachricht (MRp) der Ordnungszahl p eine Übertragungskapazitäts-Belastungsvariable (VCia) mit der Anzahl (NP) der Pakete im Bereich der Hilfsendstelle (TAi) umfaßt, wobei die Belastungsvariable nach jeder Erzeugung und Speicherung einer elementaren Informationsnachricht (mj) und der sie bildenden Pakete oder nach Empfang einer Bewilligungsnachricht durch die Hilfsendstelle aktualisiert wird und dann in die Reservierungsnachricht (MRp) eingebaut wird.

8.  Protokoll nach den Ansprüchen 6 und 7,
    **dadurch gekennzeichnet**, daß im Hinblick auf eine Unterdrückung der in den Nachfragen der Hilfsendstelle (TAi) enthaltenen Redundanz die Zustandsvariable (VEi), welche für die betrachtete Hilfsendstelle (TAi) den Nachfragezustand oder das Fehlen einer Speicherbewilligungsnachfrage kennzeichnet, eine die Werte 0 oder 1 annehmende binäre Variable ist, wobei die Nachfrage der Hilfsendstelle (TAi) um den aktuellen Wert der entsprechenden Bewilligungsvariablen (VAi) verkleinert wird, wenn die Zustandsvariable (VEi) den Wert 0 aufweist.

9.  Hilfsendstelle zur Kommunikation mittels digitalisierter Informationsnachrichten (MI) in einem Netz von Hilfsendstellen (TAi), das von einer zentralen Endstelle (TC) gemäß einem Mehrfachzugriffs-Protokoll verwaltet wird, wobei jede Hilfsendstelle (TAi) an die zentrale Endstelle (TC) eine Reservierungsnachricht (MR) sendet und die zentrale Endstelle (TC) an jede Hilfsendstelle eine Bewilligungsnachricht (MA) sendet, wobei die Informationsnachrichten (MI) für eine andere Hilfsendstelle (TAi+q) aus einer Mehrzahl von aufeinanderfolgenden, aus Datenpaketen gebildeten, elementaren Informationsnachrichten (mj) erzeugt werden, wobei diese Hilfsendstelle wenigstens einen ersten Weg umfaßt, der in Reihenanordnung einen Generator (1) für Informationsnachrichten, eine Schaltung (2) zur Unterteilung in Datenpakete (Pk), einen Pufferspeicher (3) zum Speichern der Pakete und einen Sender (4) für übertragene Informationsnachrichten (MI) aufweist, sowie einen zweiten Weg umfaßt, der einen Sender (5) für Reservierungsnachrichten (MR) aufweist, welcher von der Schaltung zur Unterteilung in Pakete und von einer Sendeverzögerungsschaltung (6) gesteuert ist, welche eine von der zentralen Endstelle (TC) erzeugte Empfangsbestätigungsnachricht (ACK) empfängt, **dadurch gekennzeichnet**, daß diese Hilfsendstelle darüber hinaus eine Schaltung (7) zur Berech-nung einer Übertragungskapazitäts-Belastungsva-riablen (VCia) aus der Anzahl von Paketen im Bereich der Hilfsendstelle (TAi) umfaßt, wobei diese Schaltung einerseits ein die Anzahl der zu übertragenden Pakete angebendes Signal empfängt, das von der Schaltung (2) zur Unterteilung in Pakete geliefert wird, und andererseits ein Signal empfängt, das die Anzahl der Zeitintervalle angibt, welche durch die von der zentralen Endstelle (TC) übertragene letzte Bewilligungsnachricht (MAp) der Ordnungszahl p bewilligt worden ist.

10. Zentrale Endstelle zur Kommunikation mittels digitalisierter Informationsnachrichten (MI) in einem Netz von Hilfsendstellen (TAi), das von einer zentralen Endstelle (TC) gemäß einem Mehrfachzugriffs-Protokoll verwaltet wird, wobei jede Hilfsendstelle (TAi) an die zentrale Endstelle (TC) eine Reservierungsnachricht (MR) sendet und die zentrale Endstelle (TC) an jede Hilfsendstelle eine Bewilligungsnachricht (MA) sendet, wobei die Informationsnachrichten (MI) für eine andere Hilfsendstelle (TAi+q) aus einer Mehrzahl von aufeinander-folgenden, aus Datenpaketen gebildeten, elemen-taren Informationsnachrichten (mj) erzeugt werden, wobei diese zentrale Endstelle eine Schaltung (10) zum Empfangen der von jeder betrachteten Hilf-sendstelle (TAi) erzeugten Reservierungsnachrich-ten (MR) und eine Schaltung (11) umfaßt zum Erzeugen von Empfangsbestätigungsnachrichten (ACK) für die Hilfsendstelle (TAi), sowie eine Schaltung (120, 121) zum Verwalten der Warteschlange der Übertragungskapazitäts-Reservierungsnachfragen der verschiedenen Hilfsendstellen (TAi), **dadurch gekennzeichnet**, daß die zentrale Endstelle umfaßt:

-   eine Schaltung (13), um für jede Hilfsendstelle (TAi) eine Übertragungsbelastungs-Variable (VCic) der Anzahl (NP) von Paketen, eine Übertragungskapazitäts-Bewilligungsvariable (VAi) und eine Bewilligungsnachfrage-Zustandsvariable (VEi) zu aktualisieren,
-   eine Schaltung (14) zum Speichern dieser aktualisierten Variablen, wobei die Verwaltung der Warteschlange gemäß einem durch die Werte der aktualisierten Variablen aktualisierten FIFO-Verfahren verwirklicht ist.

11. Zentrale Endstelle nach Anspruch 10, **dadurch gekennzeichnet**, daß die Aktualisierungs-Schaltung (13) umfaßt:

- einen Rechner (130),
- ein Programm-Modul, das die Verarbeitung der Übertragungskapazitäts-Belastungsvariablen (VCic), der Übertragungskapazitäts-Bewilligungsvariablen (VAi) und der Zustandsvariablen (VEi) gemäß dem in Anspruch 8 definierten Verfahren sicherzustellen ermöglicht.

12. Endstelle zur Kommunikation mittels digitalisierter Nachrichten (MI) für ein Netz von Endstellen (Ti) verteilter Konfiguration, wobei jede Endstelle (Ti) umfaßt:

- einen ersten Weg, der in Reihenanordnung einen Generator (21) für Informationsnachrichten (MI), eine Schaltung (22) zur Unterteilung in Datenpakete, einen Pufferspeicher (23) zum Speichern der Pakete und einen Sender (24) für übertragene Informationsnachrichten (MI) aufweist,
- einen zweiten Weg, der einen Sender (25) für Reservierungsnachrichten (MR) aufweist, welcher von der Schaltung zur Unterteilung in Pakete und von einer Schaltung (26) zur Sendesteuerung gesteuert ist,
- eine Schaltung (210) zum Empfangen der von jeder anderen Endstelle (Tk) erzeugten Reservierungsnachrichten (MR),
- eine Schaltung (212) zum Verwalten der Warteschlange der Übertragungskapazitäts-Reservierungsnachfragen der Endstellen,
  **dadurch gekennzeichnet**, daß sie umfaßt:
- eine Schaltung (27) zum Berechnen einer lokalen Übertragungskapazitäts-Belastungsvariabelen (VCLi) aus der Anzahl von Paketen im Bereich der betrachteten Endstelle (Ti), wobei die Schaltung einerseits ein von der Schaltung (22) zur Unterteilung in Pakete geliefertes Signal empfängt, das die Anzahl (NP) der zu übertragenden Pakete angibt, und andererseits ein Signal empfängt, das die Anzahl der zur Übertragung zugelassenen Pakete angibt,
- eine Schaltung (213) zum Aktualisieren der Übertragungsbelastungs-Variablen der Anzahl von Paketen (VCc), der Übertragungskapazitäts-Bewilligungsvariablen (VA) und der Bewilligungsnachfrage-Zustandsvariablen (VE),
- eine Schaltung (214) zum Speichern dieser aktualisierten Variablen, wobei die Verwaltung der Warteschlange gemäß einem durch die Werte der aktualisierten Variablen aktualisierten FIFO-Verfahren verwirklicht ist.

**Claims**

1. A protocol for multiple access to a telecommunications channel from auxiliary communication terminals (TAi) by digitized information messages (MI), in which an auxiliary terminal (TAi) addresses to said central terminal (TC) a reservation message (MR) and said central terminal (TC) addresses to the auxiliary terminal an allocation message (MA) corresponding to said information message (MI) generated by said auxiliary terminal from a plurality of successive elementary information messages (mj) heading for a different auxiliary terminal TAi+q, characterized by the fact that each reservation message of order p, (MRp), relates to the set of earlier successive elementary information messages (mj) generated, stored and not yet transmitted by said auxiliary terminal (TAi) to said different auxiliary terminal TAi+q between the earlier instant of reception, by said auxiliary terminal (TAi), of an allocation message of order p-n , (MA p-n), transmitted by said central terminal (TC), and the instant of transmission by said auxiliary terminal of said reservation message of order p, (MR p).

2. The access protocol as claimed in claim 1, characterized by said information messages (MI) being transmitted by said auxiliary terminal (TAi) according to an order p-n+1, (MIp-n+1) immediately higher than each allocation message of order p-n, (MAp-n), received by said auxiliary terminal (TAi).

3. The access protocol as claimed in either of claims 1 or 2, characterized by each elementary information message (mj) and each information message (MI p-n+1) transmitted, formed from the latter, being of any length and subdivided into packets (Pk) of arbitrary fixed length.

4. The access protocol as claimed in claim 3, characterized by each reservation message (MRp), of order p, transmitted by said auxiliary terminal (TAi) containing an item of information representing the number of packets (NP) stored at the level of said auxiliary terminal (TAi) and queueing for transmission to said other auxiliary terminal.

5. The protocol as claimed in one of claims 1 to 4, characterized by each allocation message (MA p-n) being formed from a transmission capacity load variable (VCic) of said corresponding auxiliary terminal (TAi), at the level of the central terminal (TC).

6. The protocol as claimed in claim 5, characterized by said transmission capacity load variable (VCic) at the level of said central terminal (TC) including a first memory allocation sub-variable (VAi) for the corresponding auxiliary terminal (TAi) having generated the said reservation message, and a state sub-variable (VEi), characteristic, for the relevant auxiliary terminal (TAi), of the state of request or of absence of request for memory allocation.

7. The protocol as claimed in claim 6, characterized by each reservation message (MRp) of order p comprising a transmission capacity load variable (VCia) in terms of number of packets (NP) at the level of said auxiliary terminal (TAi), said load variable being updated then incorporated with said reservation message (MRp) after each creation and storage by said auxiliary terminal of an elementary information message (mj) and of the packets forming it, or after reception of an allocation message.

8. The protocol as claimed in claims 6 and 7, characterized by, with a view to eliminating the redundancy contained in the requests of the auxiliary terminal (TAi), said state variable (VEi) characteristic for the relevant auxiliary terminal (TAi) of the state of request or of absence of request for memory allocation being a binary variable taking the values 0 or 1, the auxiliary terminal (TAi) request being decremented by the current value of the corresponding allocation variable (VAi) when the state variable (VEi) has the value zero.

9. An auxiliary terminal for intercommunication by digitized information messages (MI) in a network of auxiliary terminals (TAi) managed by a central terminal (TC), according to a multiple access protocol, each auxiliary terminal (TAi) addressing to the central terminal (TC) a reservation message (MR) and the central terminal (TC) addressing to each auxiliary terminal an allocation message (MA), said information messages (MI) being generated from a plurality of successive elementary information messages (mj), made up of data packets, heading for a different auxiliary terminal (TAi+q), this auxiliary terminal comprising at least one first path comprising, in cascade, an information message (MI) generator (1), a circuit (2) for segmenting into data packets (Pk), a buffer memory (3) for storing packets and a transmitter (4) of the transmitted information messages (MI), a second path comprising a reservation message (MR) transmitter (5) driven by the packet-segmentation circuit and by a transmission delay circuit (6) receiving an acknowledge receipt message (ACK) generated by the central terminal (TC), characterized by said auxiliary terminal further comprising a circuit (7) for calculating a transmission capacity load variable (Vcia) of the number of packets at the level of the auxiliary terminal (TAi), this circuit receiving, on the one hand, a signal delivered by said packet-segmentation circuit (2), representing the number of packets (NP) to be transmitted and, on the other hand, a signal representing the number of time intervals allocated by the last allocation message (MAp) of order p transmitted by the central terminal (TC).

10. A central terminal for intercommunication by digitized information messages in a network of auxiliary terminals (TAi) managed by this central terminal (TC) according to a multiple access protocol, each auxiliary terminal (TAi) addressing to the central terminal (TC) a reservation message (MR) and the central terminal (TC) addressing to each auxiliary terminal an allocation message (MA), said information messages (MI) being generated from a plurality of successive elementary information messages mj, made up of data packets, heading for a different auxiliary terminal (TAi+q), this central terminal comprising a circuit (10) for receiving the reservation messages (MR) generated by each relevant auxiliary terminal (TAi) and a circuit (11) generating an acknowledge receipt message (ACK) heading for said auxiliary terminal (TAi), as well as a circuit (120, 121) for managing the queue of the transmission capacity reservation requests of the various auxiliary terminals (TAi), characterized by said central terminal comprising :

- a circuit (13) for updating, for each auxiliary terminal (TAi), load variables of transmission (VCic), of the number of packets (NP), of transmission capacity allocation (VAi) and of allocation request state (VEi),
- a circuit (14) for storing these updated variables, the management of the queue being carried out according to a FIFO procedure updated by the values of said updated variables.

11. The central terminal as claimed in claim 10, characterized by said updating circuit (13) comprising :

- a calculator (130),
- a program module making it possible to ensure the processing of the load variables of transmission capacity (VCic), of transmission capacity allocation (VAi) and of state (VEi) in accordance with the procedure defined by claim 8.

12. A terminal for intercommunication by digitized information messages (MI), for a network of terminals (Ti) in distributed configuration, each terminal (Ti) comprising :

- a first path comprising in cascade, a generator (21) of information messages (MI), a circuit (22) for segmenting into data packets, a buffer memory (23) for storing packets and a transmitter (24) of the transmitted information messages (MI),
- a second path comprising a reservation message (MR) transmitter (25) driven by the packet-segmentation circuit and by a transmission control circuit (26),

- a circuit (210) for receiving the reservation messages MR generated by each other terminal Tk ;
- a circuit (212) for managing the queue of the transmission capacity reservation requests of the terminals, said terminal comprising :
- a circuit (27) for calculating a transmission capacity local load variable (VCLi) of the number of packets at the level of the relevant terminal Ti, this circuit receiving, on the one hand, a signal delivered by the packet-segmentation circuit (22) representing the number of packets (NP) to be transmitted and, on the other hand, a signal representing the number of packets authorized for transmission,
- a circuit (213) for updating the load variables of transmission, of the number of packets VCc, of transmission capacity allocation VA, and of allocation request state VE,
- a circuit (214) for storing these updated variables, the management of the queue being carried out according to a FIFO procedure updated by values of the updated variables.

a)

b)

FIG.1.    (Art antérieur)

# FIG.2.

Terminal auxiliaire TAi — Terminal central TC

Longueur du message généré en paquets | Variable de charge VCia | demande | allocation | Variable de charge VCic | Variable d'état (VEi) | Variable d'allocation (VAi)

msg de réservation ⟶
msg d'allocation ⟵

# FIG.3a.

# FIG.3b.

## FIG. 4a.

Lire la demande valeur demandée — 1000

VEi=0 — 1001

Non

Oui

Demande = valeur demandée — VAi — 1002

VCic = Demande — 1003

VCic = Valeur demandée — 1004

VEi=1 — 1005

Initializer le temporisateur de la VAi — 1006

## FIG. 4b.

VAi = Capacité allouée — 2001

VCic = VCic − VAi — 2002

VEi = 0 — 2003

Initializer le temporisateur de la VAi — 2004

# FIG.5a.

# FIG.5b.

Message d'information MI — ADR INFO

Paquets d'informations PK — ADR INFO | ADR INFO | ADR INFO

Message de réservation MR

| NTE | DEM | CDE |
|-----|-----|-----|

Accusé de réception ACK

| TYP | NTD |
|-----|-----|

Message d'allocation MA

| TYP | NTD | A | P |
|-----|-----|---|---|

FIG.5c.

EP 0 494 564 B1

# FIG.6.